# EUROPÄISCHE PATENTSCHRIFT

(11) **EP 4 251 361 B1**
(45) Veröffentlichungstag und Bekanntmachung des Hinweises auf die Patenterteilung: **01.01.2025**
(21) Anmeldenummer: 21819363.9
(22) Anmeldetag: 22.11.2021
(51) Int. Cl.: B23K 26/00, B23K 26/03, B23K 26/0622, B23K 26/082, B23K 26/359, B23K 26/364, B23K 26/402, B23K 101/00, B23K 103/00

(54) **VERFAHREN, VORRICHTUNG UND COMPUTERPROGRAMM ZUM ERZEUGEN EINER SCHWÄCHUNGSLINIE IN EINER OBERFLÄCHE EINES BAUTEILS**
METHOD, DEVICE AND COMPUTER PROGRAM FOR PRODUCING A WEAKENING LINE IN A SURFACE OF A COMPONENT
PROCÉDÉ, DISPOSITIF ET PROGRAMME D'ORDINATEUR POUR PRODUIRE UNE LIGNE DE FRAGILITÉ DANS LA SURFACE D'UN COMPOSANT

(30) Priorität: 24.11.2020 DE 102020131069
(43) Veröffentlichungstag der Anmeldung: 04.10.2023
(73) Patentinhaber: JENOPTIK Automatisierungstechnik GmbH, 07745 Jena (DE)
(72) Erfinder: BODE-MOSIG, Andreas, 07747 Jena (DE); SEIDEL, Frank, 07616 Thalbürgel (DE)
(74) Vertreter: Waldauf, Alexander
(86) Internationale Anmeldenummer: PCT/EP2021/082409
(87) Internationale Veröffentlichungsnummer: WO 2022/112144

(56) Entgegenhaltungen:
- US-A- 5 882 572
- US-A1- 2018 133 841
- US-A1- 2019 111 522

## Beschreibung

Der vorliegende Ansatz bezieht sich auf ein Verfahren und eine Vorrichtung zum Erzeugen einer Schwächungslinie in einer Oberfläche einer Komponente für ein Fahrzeug sowie ein entsprechendes Computerprogrammprodukt.

Die DE 10 2013 104 138 B3 beschreibt ein Verfahren zur Einbringung einer Schwächungslinie durch Materialabtrag an einem fasrigen Überzugmaterial.

Das Dokument US 2019/111522 A1 (offenbarend den Oberbegriff des Anspruchs 1) offenbart ein Verfahren zur Einfügung einer Bruchlinie durch einen gepulsten Laserstrahl durch einen Materialabtrag auf einem Deckmaterial.

Das Dokument US 5 882 572 A offenbart ein Verfahren zur Herstellung einer linienförmigen Schwächung mittels eines Lasers.

Das Dokument US 2018/133841 A1 offenbart ein Verfahren und eine Vorrichtung zur Herstellung einer Bruchlinie in einem planaren Werkstück entlang einer vordefinierten Kontur durch einen Materialabtrag mittels eines Lasers.

### Offenbarung der Erfindung

Vor diesem Hintergrund werden mit dem vorliegenden Ansatz ein Verfahren zum Erzeugen einer Schwächungslinie in einer Oberfläche einer Komponente für ein Fahrzeug und eine Vorrichtung zum Erzeugen einer Schwächungslinie in einer Oberfläche einer Komponente für ein Fahrzeug gemäß den Hauptansprüchen vorgestellt. Vorteilhafte Ausgestaltungen ergeben sich aus den jeweiligen Unteransprüchen und der nachfolgenden Beschreibung.

Die mit dem vorgestellten Ansatz erreichbaren Vorteile bestehen darin, dass eine Schwächungslinie in einer Oberfläche einer Komponente für ein Fahrzeug besonders schnell erzeugt werden kann. Entsprechend der Erfindung sind ein Verfahren zum Erzeugen einer Schwächungslinie in einer Oberfläche eines Bauteils, eine Vorrichtung, einen Computerprogramm und ein maschinenlesbares Speichermedium mit einem solchen Programm in den entsprechenden Ansprüchen 1, 9, 10 und 11 definiert.

Weitere Ausführungsbeipiele der Erfindung sind in den abhängigen Ansprüchen definiert.

Ein Verfahren zum Erzeugen einer Schwächungslinie in einer Oberfläche einer Komponente für ein Fahrzeug weist einen Schritt des Führens und einen Schritt des Überspringens auf. Im Schritt des Führens wird eine Abtrageeinrichtung zum Abtragen eines Materials der Oberfläche über eine Mehrzahl von Abschnitten einer vordefinierten linienförmigen Kontur unter Verwendung eines aktivierten Laserstrahls geführt, um für zumindest einen der Abschnitte eine Sollwandstärke zu erzeugen, um die Schwächungslinie zu erzeugen. Im Schritt des Überspringens wird der Abschnitt übersprungen, wenn der Abschnitt die Sollwandstärke aufweist.

Bei der Komponente kann es sich um ein Abdeckelement für einen Airbag eines Fahrzeugs handeln, welches unter Verwendung des hier vorgestellten Verfahrens im Bereich von Airbagklappen mit Sollbruchstellen versehen werden kann. Die Oberfläche kann ein oder mehrere Kunststoffe wie Polypropylen (PP), thermoplastisches Polyolefin (TPO), Polyurethan vorgesehen, um im eingebauten Zustand des Bauteils in dem Fahrzeug auf einer dem Fahrzeuginsassen abgewandten Seite des Bauteils, also für Fahrzeuginsassen unsichtbar, angeordnet zu sein. Bei der Abtrageeinrichtung kann es sich um einen Laser handeln, welcher das Abtragen des Materials mittels des Laserstrahls durch Materialerwärmung durchführt. Zum Durchführen einer Bewegung kann die Abtrageeinrichtung ferner einen Scanner aufweisen, beispielsweise einen Galvanometerscanner. Die Mehrzahl der Abschnitte der vordefinierten linienförmigen Kontur kann in beliebiger Weise unterschiedlich oder gleichförmig ausgeformt sein, beispielsweise kann zumindest ein Abschnitt als eine gerade oder gebogene Linie ausgeformt sein. Die Abschnitte können zumindest teilweise direkt ineinander übergehend angeordnet sein, um eine durchgehende Schwächungslinie oder zumindest teilweise getrennt voneinander angeordnet sein, um eine mit beliebigen Abständen unter den Abschnitten unterbrochene/perforierte Schwächungslinie zu erzeugen. Die Abstände können hierbei gleich sein oder sich voneinander unterscheiden. Jeder der Abschnitte kann eine Sollwandstärke aufweisen, welche je gleich sein oder sich voneinander unterscheiden können. Das hier vorgestellte Verfahren ermöglicht es, fertige Abschnitte, welche ihre gewünschte Sollwandstärke erreicht haben, zu überspringen, um den Bearbeitungsprozess zum Erzeugen der Schwächungslinie abzukürzen. Im Schritt des Überspringens kann der Abschnitt ausgelassen werden, d. h., dass die Abtrageeinrichtung nicht über den Abschnitt geführt wird. Im Schritt des Überspringens kann die Abtrageeinrichtung unter Auslassung des Abschnitts zu einem auf den Abschnitt folgenden Folgeabschnitt geführt werden. Im Schritt des Überspringens wird die Kontur demnach aktiv geändert, insbesondere verkürzt.

Im Schritt des Überspringens kann eine Ausgabe des Laserstrahls deaktiviert werden. So kann sichergestellt werden, dass während des Überspringens, welches zur Überbrückung einer Distanz zu einem Folgeabschnitt dient, kein Material abgetragen wird.

Es ist weiterhin von Vorteil, wenn das Verfahren ferner einen Schritt des Generierens aufweist, in dem eine Vorlaufstrecke für einen auf den Abschnitt folgenden Folgeabschnitt der Kontur generiert wird, wobei die Abtrageeinrichtung im Schritt des Überspringens auf die Vorlaufstrecke springt, um über die Vorlaufstrecke bewegt zu werden und/oder in dem eine Nachlaufstrecke für einen vor dem Abschnitt angeordneten Vorababschnitt der Kontur generiert wird, wobei die Abtrageeinrichtung vor dem Schritt des Überspringens über die Nachlaufstrecke bewegt wird. Die Vorlaufstrecke kann als eine Strecke zwischen dem Abschnitt und dem Folgeabschnitt generiert werden. Die Abtrageeinrichtung kann im Schritt des Überspringens auf einen dem Abschnitt zugewandten Anfang der Vorlaufstrecke springen, um dann über die Vorlaufstrecke zu einem dem Folgeabschnitt zugewandten Ende der Vorlaufstrecke bewegt zu werden. Entsprechend kann im Schritt des Generierens die Nachlaufstrecke zwischen dem Vorababschnitt und dem Abschnitt generiert werden, und/oder wobei die Abtrageeinrichtung vor dem Schritt des Überspringens über einen dem Vorababschnitt zugewandten Anfang der Nachlaufstrecke bis zu einem dem Abschnitt zugewandten Ende der Nachlaufstrecke bewegt wird. Beim Bewegen der Abtrageeinrichtung über die Vorlaufstrecke und/oder über die Nachlaufstrecke kann eine Ausgabe des Laserstrahls deaktiviert werden. Derartige Vorlaufstrecken und/oder Nachlaufstrecken können für alle Abschnitte der Kontur generiert werden. Bei zwei direkt miteinander verbundenen Abschnitten kann die Abtrageeinrichtung nach Bewegen über ein Ende einer Nachlaufstrecke eines vorangehenden Abschnitts zu einem Anfang eines Vorababschnitts eines auf den Abschnitt folgenden Folgeabschnitts springen. Nicht nur beim Überspringen, sondern auch beim Springen zwischen zwei aufeinanderfolgenden getrennt voneinander angeordneten Abschnitten der Kontur kann die Abtrageeinrichtung entsprechend erst auf die Vorlaufstrecke eines Folgeabschnitts springen und/oder erst nach Bewegen über die Nachlaufstrecke eines vor dem Folgeabschnitt angeordneten Abschnitts springen. Beispielsweise kann stets nur zwischen Enden von Vorlaufstrecken und/oder Anfängen von Nachlaufstrecken gesprungen/übersprungen werden. Eine derartige Vorlaufstrecke und/oder Nachlaufstrecke ermöglicht es, dass unabhängig davon, wann gesprungen oder nach Fertigstellung eines Abschnitts übersprungen wird, die Abtrageeinrichtung stets aus desselben Richtung auf die Abschnitte geführt wird. Auch wird beim Bewegen über die Vorlaufstrecke und/oder Nachlaufstrecke Zeit für eine Synchronisierung zwischen Scanner und Laser geschaffen.

Im Schritt des Generierens kann die Vorlaufstrecke generiert werden, die direkt mit dem Folgeabschnitt verbunden ist und/oder die Nachlaufstrecke generiert werden, die direkt mit dem Vorababschnitt verbunden ist. Beispielsweise kann im Schritt des Generierens die Vorlaufstrecke generiert werden, die direkt als eine Verlängerung des Folgeabschnitts mit diesem verbunden ist und/oder die Nachlaufstrecke generiert werden, die direkt als eine Verlängerung des Vorababschnitts mit diesem verbunden ist. So kann beispielsweise eine Ausrichtung der Vorlaufstrecke und/oder Nachlaufstrecke jener des zugehörigen Abschnitts entsprechen. Wenn ein Abschnitt beispielsweise gerade verlaufend ausgeformt ist, so kann auch dessen Vorlaufstrecke und/oder Nachlaufstrecke gerade ausgeformt sein. Bei einem gebogenen Abschnitt kann auch dessen Vorlaufstrecke und/oder Nachlaufstrecke entsprechend gebogen ausgeformt sein.

Gemäß einer Ausführungsform kann im Schritt des Generierens die Vorlaufstrecke generiert werden, deren Vorlauflänge kürzer ist, als eine Länge des Folgeabschnitts und/oder die Nachlaufstrecke generiert werden, deren Nachlauflänge kürzer ist, als eine Länge des Vorababschnitts. Die Vorlaufstrecke und/oder Nachlaufstrecke können sehr kurz sein, da sie lediglich zur Ausrichtung der Abtrageeinrichtung dienen. Unnötig lange Wege können somit vermieden werden.

Im Schritt des Überspringens kann die Abtrageeinrichtung auf direktem Weg von einem vor dem Abschnitt angeordneten Vorababschnitt der Kontur zu einem auf den Abschnitt folgenden Folgeabschnitt der Kontur bewegt werden. So kann die Abtrageeinrichtung im Schritt des Überspringens auf kürzestem Weg von dem Vorababschnitt auf den Folgeabschnitt bewegt werden, beispielsweise auf einer Geraden ohne unnötige Umwege. Hierbei kann die Abtrageeinrichtung im Schritt des Überspringens dennoch von dem Ende der Nachlaufstrecke des Vorababschnitts auf den Anfang der Vorlaufstrecke des Folgeabschnitts bewegt werden. Beim Überspringen kann vorteilhafterweise stets der Weg mit dem geringsten Abstand zwischen einem Vorababschnitt und einem Abschnitt und/oder der Weg mit dem geringsten Abstand zwischen einem Abschnitt und einem Folgeabschnitt gewählt werden.

Es ist weiterhin von Vorteil, wenn im Schritt des Überspringens eine Bewegungsgeschwindigkeit der Abtrageeinrichtung höher ist, als im Schritt des Führens. So kann im Schritt des Überspringens die Abtrageeinrichtung mit maximaler Geschwindigkeit bewegt werden. Auch beim Springen zwischen aufeinanderfolgenden getrennt unverbundenen Abschnitten kann die Abtrageeinrichtung mit maximaler Geschwindigkeit bewegt werden. Da beim Überspringen und Springen keine Materialbearbeitung vorgesehen ist, kann hierbei zur Zeitersparnis eine besonders schnelle Bewegungsgeschwindigkeit realisiert sein. Im Schritt des Führens hingegen, in dem die Oberfläche abgetragen wird, kann eine für die Bearbeitung geeignete langsamere Bewegungsgeschwindigkeit für die Abtrageeinrichtung realisiert sein.

Das Verfahren kann einen Schritt des weiteren Überspringens aufweisen, in dem ein weiterer Abschnitt der Kontur übersprungen wird, wenn der weitere Abschnitt die oder eine weitere Sollwandstärke aufweist. Dies dient einer weiteren Zeitersparnis. Entsprechend können alle Abschnitt, die je ihre Sollwandstärke aufweisen, übersprungen werden.

Gemäß einer Ausführungsform können die Schritte des Verfahrens wiederholt werden bis alle Abschnitte der Kontur je eine dezidierte Sollwandstärke aufweisen. So kann innerhalb kurzer Zeit eine vollständige Schwächungslinie erzeugt werden. Hierbei kann die Abtrageeinrichtung zum Erreichen der Sollwandstärke für die einzelnen Abschnitte wiederholt über die Abschnitte geführt werden, wobei ein wiederholtes Führen über den gleichen Abschnitt frühestens nach einer definierten Zeitspanne nach dem Bearbeiten wiederholt werden kann. Eine solche Zeitverzögerung zwischen den Abtastzyklen/Bearbeitungszyklen kann ein Abkühlen der Oberfläche ermöglichen, um ein Überhitzen der Oberfläche zu verhindern.

Eine Vorrichtung ist ausgebildet, um die Schritte einer Variante eines hier vorgestellten Verfahrens in entsprechenden Einrichtungen durchzuführen beziehungsweise umzusetzen. Auch durch diese Ausführungsvariante des Ansatzes in Form einer Vorrichtung kann die dem Ansatz zugrundeliegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Der Ansatz wird nachstehend anhand der beigefügten Zeichnungen beispielhaft näher erläutert. Es zeigen:
Fig. 1 eine schematische Darstellung einer Kontur für eine Schwächungslinie.
Fig. 2 eine Gegenüberstellung von schematisch dargestellten Konturen 100 zur Bearbeitung mit einer Vorrichtung gemäß einem Ausführungsbeispiel zum Erzeugen einer Schwächungslinie in einer Oberfläche eines Bauteils;
Fig. 3 eine schematische Darstellung einer Vorrichtung gemäß einem Ausführungsbeispiel zum Erzeugen einer Schwächungslinie in einer Oberfläche eines Bauteils;
Fig. 4 eine schematische Darstellung einer Vorrichtung gemäß einem Ausführungsbeispiel zum Erzeugen einer Schwächungslinie in einer Oberfläche eines Bauteils; und
Fig. 5 ein Ablaufdiagramm eines Verfahrens gemäß einem Ausführungsbeispiel zum Erzeugen einer Schwächungslinie in einer Oberfläche eines Bauteils.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

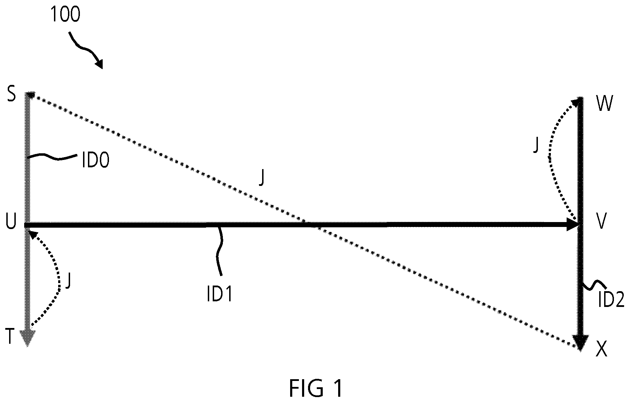

Fig. 1 zeigt eine schematische Darstellung einer Kontur 100 für eine Schwächungslinie.

Beschrieben wird in Fig. 1 ein gängiger Bearbeitungsvorgang zur Herstellung der Schwächungslinie unter Verwendung eines Laserstrahls entlang der Kontur 100. Die Kontur 100 ist hier beispielhaft in drei Segmente ID0, ID1, ID2 unterteilt. Eine gesteuerte Bewegung des Laserstrahls erfolgt üblicherweise über einen Galvanometerscanner. Die Segmente ID0, ID1, ID2, welche die herzustellenden Schwächungslinien anzeigen, sind in Fig. 1 mit durchgehend gezeichneten Umrissen/Linien dargestellt. Die gestrichelten Umrisse/Linien J zeigen einen jeweiligen Sprung des Laserstrahls zu einem Punkt eines nächsten Abtrags. Während der Sprünge J wird der Laserstrahl hier beispielhaft ausgeschaltet.

In dem hier gezeigten Beispiel startet die Bearbeitung mittels des Laserstrahls an Punkt S des Segments ID0 und wird über den Punkt U bis zum Punkt T des Segments ID0 geführt. Am Punkt T erfolgt ein Sprung J zum Punkt U. Danach wird der Laserstrahl über das Segment ID1 zum Punkt V geführt. Am Punkt V erfolgt ein Sprung J zum Punkt W des Segments ID2. Danach wird der Laserstrahl vom Punkt W über den Punkt V bis zum Punkt X des Segments ID2 geführt. Am Punkt X erfolgt ein Sprung J zum Punkt S des Segments ID0. An Punkt S wiederholt sich der eben beschriebene Ablauf solange, bis alle Segmente ID0, ID1, ID2 eine je für sie vorgesehene Sollwandstärke aufweisen.

Im hier beschriebenen Beispiel erreicht das Segment ID0 seine Sollwandstärke nach 11 Bearbeitungszyklen, das Segment ID1 seine Sollwandstärke nach 16 Zyklen und das Segment ID2 seine Sollwandstärke nach 14 Zyklen. Im hier beschriebenen Beispiel ist die maximale Anzahl an Zyklen 16. Das bedeutet, dass der Laserstrahl die komplette Kontur 100 16 Mal überfahren wird, unabhängig davon, ob ein Segment ID0, ID1, ID2 aufgrund der Einstellungen bereits als "Ok", also mit gewünschter Sollwandstärke, bewertet wird oder nicht. Nach bisherigem Stand besteht lediglich die Möglichkeit, an einzelnen Abtragspunkten den Laser abzuschalten, wenn der vorab definierte Wert der Restwandstärke an diesem Punkt bereits erreicht wurde.

Der Sprung J zwischen ID0 und ID1 bzw. zwischen ID1 und ID2 würde üblicherweise in gerader Linie entlang der Bearbeitungslinie verlaufen. Dies wird lediglich zur besseren Darstellung in Figur 1 als Kurve gezeigt.

In dem hier beschriebenen Beispiel erfolgen lange Zykluszeiten durch stetige Wiederholung der Abtastbewegung sowie ein häufiges An- und Abschalten des Lasers.

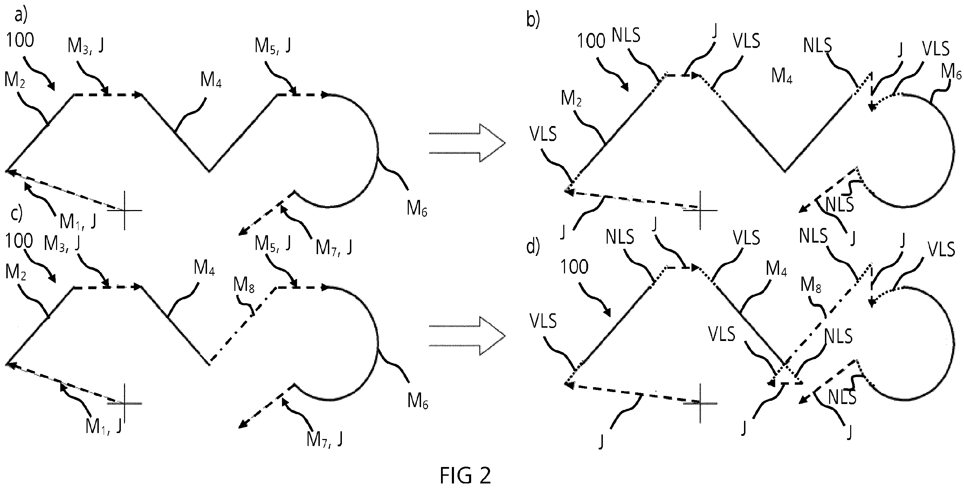

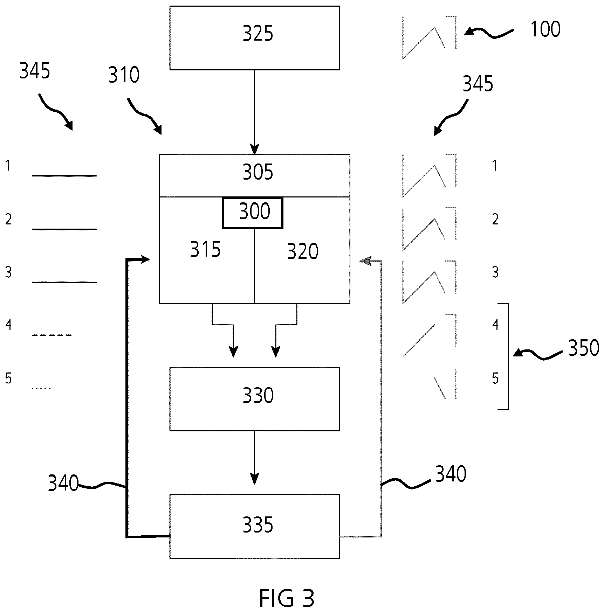

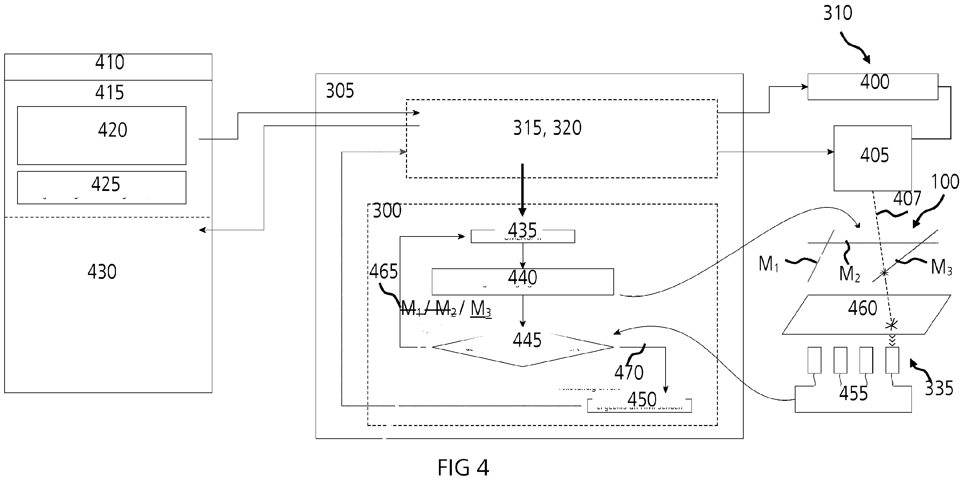

Fig. 2 zeigt eine Gegenüberstellung von schematisch dargestellten Konturen 100 zur Bearbeitung mit einer Vorrichtung gemäß einem Ausführungsbeispiel zum Erzeugen einer Schwächungslinie in einer Oberfläche eines Bauteils. Die Vorrichtung ist in den Figuren 3 und 4 gezeigt.

Zumindest eine der Konturen 100 ist gemäß einem Ausführungsbeispiel zum Erzeugen der Schwächungslinie in der Oberfläche eines Abdeckelements einer Airbagabdeckung eines Fahrzeugairbags anwendbar, dort beispielsweise markiert. Die Kontur 100 im Bildabschnitt a) weist gemäß diesem Ausführungsbeispiel lediglich beispielhaft sieben aufeinanderfolgende Abschnitte M₁, M₂, M₃, M₄, M₅, M₆, M₇ auf, für die dieselben oder beliebige unterschiedliche Sollwandstärken vorgesehen sind.

Die Vorrichtung zum Erzeugen der Schwächungslinie in der Oberfläche ist ausgebildet, um ein Führen einer Abtrageeinrichtung zum Abtragen eines Materials der Oberfläche über die Mehrzahl von Abschnitten M₁, M₂, M₃, M₄, M₅, M₆, M₇ der vordefinierten linienförmigen Kontur 100 unter Verwendung eines aktivierten Laserstrahls zu führen, um für zumindest einen der Abschnitte M₁, M₂, M₃, M₄, M₅, M₆, M₇ eine Sollwandstärke zu erzeugen, um die Schwächungslinie zu erzeugen. Die Vorrichtung ist ferner ausgebildet, um ein Überspringen des Abschnitts M₁, M₂, M₃, M₄, M₅, M₆, M₇ zu bewirken, wenn der Abschnitt M₁, M₂, M₃, M₄, M₅, M₆, M₇ die Sollwandstärke aufweist.

Die Abschnitte M₁, M₂, M₃, M₄, M₅, M₆, M₇ sind gemäß diesem Ausführungsbeispiel in beliebiger Weise unterschiedlich ausgeformt, beispielsweise ist der zweite Abschnitt M₂ gerade und/oder der vierten Abschnitt M₄ V-förmig und/oder der sechste Abschnitt M₆ als eine gebogene Linie ausgeformt. Die Abschnitte M₁, M₂, M₃, M₄, M₅, M₆, M₇ sind gemäß einem Ausführungsbeispiel zumindest teilweise direkt ineinander übergehend angeordnet, um eine durchgehende Schwächungslinie oder zumindest teilweise getrennt voneinander angeordnet, um eine mit beliebigen Abständen unter den Abschnitten M₁, M₂, M₃, M₄, M₅, M₆, M₇ unterbrochene/perforierte Schwächungslinie zu erzeugen. Die Abstände sind hierbei gleich oder unterscheiden sich voneinander. Jeder der Abschnitte M₁, M₂, M₃, M₄, M₅, M₆, M₇ weist gemäß diesem Ausführungsbeispiel eine Sollwandstärke auf, welche je gleich sind oder sich voneinander unterscheiden. Die Abschnitte M₁, M₃, M₅, M₇ weisen gemäß diesem Ausführungsbeispiel bereits deren gewünschte Sollwandstärken auf, weshalb die Vorrichtung das Überspringen dieser Abschnitt M₁, M₃, M₅, M₇ bewirkt, um den Bearbeitungsprozess zum Erzeugen der Schwächungslinie abzukürzen. Beim Überspringen werden die Abschnitte M₁, M₃, M₅, M₇ je ausgelassen, d. h., dass die Abtrageeinrichtung nicht über die Abschnitte M₁, M₃, M₅, M₇ geführt wird. Beim Überspringen wird die Abtrageeinrichtung jeweils unter Auslassung des übersprungenen Abschnitts M₁, M₃, M₅, M₇ zu einem auf den übersprungenen Abschnitt M₁, M₃, M₅, M₇ folgenden Folgeabschnitt geführt. Dabei wird die Kontur 100 aktiv geändert, hier verkürzt. Die übersprungenen Abschnitte M₁, M₃, M₅, M₇ sind in Fig. 2 nicht dargestellt, die gestrichelten Pfeile kennzeichnen Sprünge J beim Überspringen der Abschnitte M₁, M₃, M₅, M₇.

Die Vorrichtung ist gemäß diesem Ausführungsbeispiel ferner ausgebildet, um beim Überspringen eine Ausgabe des Laserstrahls zu deaktivieren.

Die Vorrichtung ist gemäß diesem Ausführungsbeispiel ausgebildet, um die Abtrageeinrichtung beim Überspringen auf direktem Weg von einem vor dem Abschnitt M₁, M₂, M₃, M₄, M₅, M₆, M₇ angeordneten Vorababschnitt M₁, M₂, M₃, M₄, M₅, M₆, M₇ der Kontur 100 zu einem auf den Abschnitt M₁, M₂, M₃, M₄, M₅, M₆, M₇ folgenden Folgeabschnitt M₁, M₂, M₃, M₄, M₅, M₆, M₇ der Kontur 100 zu bewegen. Die Vorrichtung ist gemäß diesem Ausführungsbeispiel ferner ausgebildet, um beim Überspringen eine Bewegungsgeschwindigkeit der Abtrageeinrichtung gegenüber einer Bewegungsgeschwindigkeit beim Führen über den Abschnitt M₁, M₂, M₃, M₄, M₅, M₆, M₇ beim Bearbeiten zu erhöhen. Gemäß diesem Ausführungsbeispiel ist die Vorrichtung ausgebildet, um ein Überspringen aller Abschnitte M₁, M₂, M₃, M₄, M₅, M₆, M₇ der Kontur 100 zu bewirken, sobald diese je ihre Sollwandstärke aufweisen.

Gemäß diesem Ausführungsbeispiel ist die Vorrichtung ausgebildet, um das Führen der Abtrageeinrichtung zum Abtragen des Materials der Oberfläche über die Mehrzahl der Abschnitten M₁, M₂, M₃, M₄, M₅, M₆, M₇ der Kontur 100 unter Verwendung des aktivierten Laserstrahls sowie das Überspringen der Abschnitt M₁, M₂, M₃, M₄, M₅, M₆, M₇ mit der erreichten Sollwandstärke zu wiederholen, bis alle Abschnitte M₁, M₂, M₃, M₄, M₅, M₆, M₇ der Kontur 100 je eine dezidierte Sollwandstärke aufweisen. Gemäß einem Ausführungsbeispiel ermöglicht die Vorrichtung hierbei ein wiederholtes Führen über den gleichen Abschnitt M₁, M₂, M₃, M₄, M₅, M₆, M₇ frühestens nach einer definierten Zeitspanne nach dem Bearbeiten.

In Bildabschnitt b) wird das Generieren einer Vorlaufstrecke VLS und/oder Nachlaufstrecke NLS beschrieben. Bei einem Sprung J des ausgeschalteten Laserstrahls zum nächsten Bearbeitungsabschnitt M₂, M₄, M₆ ist es notwendig, die mechanische Bewegung mit dem Zeitpunkt des "Laser anschalten" zu synchronisieren. Der Laserstrahl soll auf jeden Abtragspunkt bei jeder wiederholten Abtastbewegung an gleicher Position mit gleichem Fokus auftreffen. Nur dann ist gewährleistet, dass das Material in jedem Loch kontinuierlich bis zum definierten Wert abgetragen wird. Das Überspringen von fertig gestellten Abschnitten erfordert eine flexible Synchronisation zwischen Laserbetrieb und Strahlposition. Durch die Vorlaufstrecke VLS und/oder Nachlaufstrecke NLS kann Zeit für die Synchronisation geschaffen werden. Gemäß einem Ausführungsbeispiel weist die Vorrichtung hierzu eine Generiereinrichtung auf, die ausgebildet ist, um die Vorlaufstrecke VLS für einen auf den Abschnitt M₁, M₂, M₃, M₄, M₅, M₆, M₇ folgenden Folgeabschnitt M₁, M₂, M₃, M₄, M₅, M₆, M₇ der Kontur 100 zu generieren, wobei die Vorrichtung ausgebildet ist, um die Abtrageeinrichtung beim Überspringen auf die Vorlaufstrecke VLS zu bewegen, um die Abtrageeinrichtung über die Vorlaufstrecke VLS zu bewegen und/oder wobei die Generiereinrichtung ausgebildet ist, um die Nachlaufstrecke NLS für einen vor dem Abschnitt M₁, M₂, M₃, M₄, M₅, M₆, M₇ angeordneten Vorababschnitt M₁, M₂, M₃, M₄, M₅, M₆, M₇ der Kontur 100 zu generieren, wobei die Vorrichtung ausgebildet ist, um die Abtrageeinrichtung vor dem Überspringen über die Nachlaufstrecke NLS zu bewegen.

Die Vorlaufstrecke VLS wird gemäß diesem Ausführungsbeispiel je als eine Strecke zwischen den Abschnitten M₁, M₂, M₃, M₄, M₅, M₆, M₇ und deren Folgeabschnitten M₁, M₂, M₃, M₄, M₅, M₆, M₇ generiert. Gemäß diesem Ausführungsbeispiel ist die Vorrichtung ausgebildet, um die Abtrageeinrichtung beim Überspringen auf einen dem übersprungenen Abschnitt M₁, M₂, M₃, M₄, M₅, M₆, M₇ zugewandten Anfang der Vorlaufstrecke VLS zu bewegen, um dann über die Vorlaufstrecke VLS zu einem dem Folgeabschnitt M₁, M₂, M₃, M₄, M₅, M₆, M₇ zugewandten Ende der Vorlaufstrecke VLS zu bewegen. Entsprechend ist die Generiereinrichtung gemäß diesem Ausführungsbeispiel ausgebildet, um die Nachlaufstrecke NLS zwischen dem Vorababschnitt M₁, M₂, M₃, M₄, M₅, M₆, M₇ und dem übersprungenen Abschnitt M₁, M₂, M₃, M₄, M₅, M₆, M₇ zu generieren. Gemäß diesem Ausführungsbeispiel ist die Vorrichtung ausgebildet, um die Abtrageeinrichtung vor dem Überspringen über einen dem Vorababschnitt M₁, M₂, M₃, M₄, M₅, M₆, M₇ zugewandten Anfang der Nachlaufstrecke NLS bis zu einem dem Abschnitt M₁, M₂, M₃, M₄, M₅, M₆, M₇ zugewandten Ende der Nachlaufstrecke NLS zu bewegen. Beim Bewegen der Abtrageeinrichtung über die Vorlaufstrecke VLS und/oder über die Nachlaufstrecke NLS deaktiviert die Vorrichtung gemäß diesem Ausführungsbeispiel eine Ausgabe des Laserstrahls. Die Generiereinrichtung ist gemäß diesem Ausführungsbeispiel dazu ausgebildet, um die Vorlaufstrecke VLS zu generieren, die direkt mit dem Folgeabschnitt M₁, M₂, M₃, M₄, M₅, M₆, M₇ verbunden ist und/oder die Nachlaufstrecke NLS zu generieren, die direkt mit dem Vorababschnitt M₁, M₂, M₃, M₄, M₅, M₆, M₇ verbunden ist. Beispielsweise generiert die Generiereinrichtung gemäß einem Ausführungsbeispiel die Vorlaufstrecke VLS, die direkt als eine Verlängerung des Folgeabschnitts M₁, M₂, M₃, M₄, M₅, M₆, M₇ mit diesem verbunden ist und/oder die Nachlaufstrecke NLS, die direkt als eine Verlängerung des Vorababschnitts M₁, M₂, M₃, M₄, M₅, M₆, M₇ mit diesem verbunden ist. So wird die Vorlaufstrecke VLS und/oder Nachlaufstrecke NLS für einen gerade verlaufenden Abschnitt, hier die Abschnitte M₁, M₄, gemäß einem Ausführungsbeispiel ebenfalls als gerade verlaufend generiert. Entsprechend wird die Vorlaufstrecke VLS und/oder Nachlaufstrecke NLS für einen gebogenen Abschnitt, hier der Abschnitt M₆, gemäß einem Ausführungsbeispiel ebenfalls als entsprechend gebogen generiert.

Gemäß einem Ausführungsbeispiel ist die Generiereinrichtung ferner ausgebildet, um die Vorlaufstrecke VLS zu generieren, deren Vorlauflänge kürzer ist, als eine Länge des Folgeabschnitts und/oder die Nachlaufstrecke NLS zu generieren, deren Nachlauflänge kürzer ist, als eine Länge des Vorababschnitts.

Bildabschnitt c) entspricht zwar optisch Bildabschnitt a), wobei Bildabschnitt c) gemäß diesem Ausführungsbeispiel einen achten Abschnitt M₈ aufweist. Der in Bildabschnitt a) V-förmig ausgeformte Abschnitt M₄ ist in Bildabschnitt c) in zwei miteinander verbundene jeweils gerade Abschnitte M₄, M₈ unterteilt, welche gemeinsam die V-Form ergeben. Der achte Abschnitt M₈ ist gemäß diesem Ausführungsbeispiel zwischen dem vierten Abschnitt M₄ und dem fünften Abschnitt M₅ angeordnet.

In Bildabschnitt d) ist entsprechend der Beschreibung in Bildabschnitt b) die Generierung einer Nachlaufstrecke NLS für den nun geraden vierten Abschnitt M₄ und die Generierung einer Vorlaufstrecke VLS für den achten Abschnitt M₈ dargestellt. Bei den zwei direkt miteinander verbundenen Abschnitten M₄, M₈ springt die Abtrageeinrichtung gemäß diesem Ausführungsbeispiel nach Bewegen über ein Ende der Nachlaufstrecke NLS des vorangehenden Abschnitts M₄ zu einem Anfang der Vorlaufstrecke VLS des auf den Abschnitt M₄ folgenden Folgeabschnitts M₈.

In den Bildabschnitten b) und d) werden die Vorlaufstrecken VLS und Nachlaufstrecken NLS für die zu bearbeitenden Abschnitte M₂, M₄, M₆, M₈ erzeugt, welche zum Be- bzw. Entschleunigen der Bewegung des Laserstrahls dienen. Durch diese Vorlaufstrecken VLS bzw. Nachlaufstrecken NLS mit ausgeschaltetem Laser wird Zeit gewonnen, um den Laserbetrieb und die Strahlposition zu synchronisieren. Damit kann sichergestellt werden, dass der Laser an exakt gleicher Stelle auf den ersten Abtragspunkt trifft, gleichgültig aus welcher Richtung der Strahl "gesprungen" kommt.

Weiterhin wird gemäß einem Ausführungsbeispiel der Zeitraum/das Zeitfenster der Vorlaufstrecke VLS genutzt, um eine Vorauswertung des Prozesses schon in einem Mikrocontroller zu machen und zu entscheiden, ob nachfolgende Abschnitte direkt übersprungen werden sollen oder nicht. Dazu wird gemäß einem Ausführungsbeispiel das Ergebnis aus der vorhergehenden Abtastbewegung abgerufen, verarbeitet und der weitere Bewegungsablauf gesteuert.

Zum Ende des Prozesses ist die Zahl der verbleibenden zu bearbeitenden Abschnitte M₂, M₄, M₆, M₈ geringer und eine Zeit zwischen den Wiederholungen der Abtastbewegungen wird kürzer. Dies kann zu erhöhter unerwünschter Wärmeeinwirkung auf das Material führen. Um dies zu vermeiden ist gemäß einem Ausführungsbeispiel eine Zeitverzögerung für die nächste Abtastbewegung realisiert.

Die hier vorgestellte Vorrichtung ermöglicht vorteilhafterweise ein Verfahren zur Einbringung einer Schwächungslinie in ein Abdeckelement durch Materialabtrag mittels Laser. Für die sichere Entfaltung eines Airbags ist es wichtig, dass Abdeckelemente im Bereich der Airbagklappen mit Sollbruchstellen versehen werden, diese werden mit der Einbringung von Schwächungslinien realisiert. Aus optischen Gründen erfolgt die Einbringung in der Regel von einer nicht sichtbaren Rückseite des Abdeckelements aus. Neben einer genau einstellbaren verbleibenden Reißfestigkeit der Schwächungslinie werden die höchsten Qualitätsansprüche an die Oberflächen nur dann erfüllt, wenn die Schwächungslinie auf der dem Passagier zugewandten Ansichtsseite des Abdeckelements optisch und haptisch nicht wahrnehmbar ist.

Als Abdeckelemente werden hier im weitesten Sinn Interieur-Elemente in Fahrzeugen verstanden, insbesondere Instrumententafeln. Diese Abdeckelemente sind gemäß unterschiedlichen Ausführungsbeispielen ein- oder mehrschichtig ausgebildet. Als Materialien weist das Abdeckelement gemäß einem Ausführungsbeispiel Kunststoffe wie Polypropylen (PP), thermoplastisches Polyolefin (TPO), Polyurethan (PU) und/oder Polyvinylchlorid auf. Für die dem Passagier zugewandte Ansichtsseite des Abdeckelements sind gemäß einem Ausführungsbeispiel hochwertige Dekorschichten, z. B. aus textilem Material oder Leder, verarbeitet.

Figur 3 zeigt eine schematische Darstellung einer Vorrichtung 300 gemäß einem Ausführungsbeispiel zum Erzeugen einer Schwächungslinie in einer Oberfläche eines Bauteils. Dabei kann es sich um die in Fig. 2 beschriebene Vorrichtung 300 handeln.

Die Vorrichtung 300 ist gemäß diesem Ausführungsbeispiel in eine Steuerung 305 der Abtrageeinrichtung 310 implementiert. Die Steuerung 305 umfasst gemäß diesem Ausführungsbeispiel ferner eine Laseransteuerung 315 und eine Scanneransteuerung 320, wobei die Vorrichtung 300 gemäß diesem Ausführungsbeispiel signalübertragungsfähig mit der Scanneransteuerung 320 und der Laseransteuerung 315 verbunden ist.

Die Kontur 100, die auch als "Figur" bezeichnet werden kann, wird gemäß diesem Ausführungsbeispiel an einem PC 325 entworfen und von der Steuerung 305 empfangen. Ein Werkstück 330, hier in Form der Oberfläche des Abdeckelements, wird abhängig von der Laseransteuerung 315 und Scanneransteuerung 320 bearbeitet. Eine Sensorik 335 sensiert Werte wie die Wandstärken des Abdeckelements an den einzelnen Abschnitten der Kontur 100. Die Laseransteuerung 315 wird abhängig von den Sensorwerten 340 der Sensorik 335 geregelt. Dank der hier vorgestellten Vorrichtung 300 wird auch die Scanneransteuerung 320 abhängig von den Sensorwerten 340 der Sensorik 335 geregelt.

In einem Anwendungsbeispiel wird unter Verwendung der Abtrageeinrichtung 310 ein gepulster Laserstrahl auf die Rückseite des Abdeckelements gerichtet und linienförmig geführt. Die Parameter des Laserpulses sind dabei so gewählt, dass dieser einen Energieeintrag bewirkt, der am jeweiligen Auftreffort zu einer Erwärmung des Materials auf eine Temperatur oberhalb einer Ablationsschwelle führt, jedoch die Temperatur in an den jeweiligen Auftreffort angrenzenden Bereichen des Materials unterhalb einer Grenztemperatur gehalten wird. Diese Abtastbewegung entlang der herzustellenden Schwächungslinie wird mehrfach wiederholt, bis zum Erreichen einer definierten Restwandstärke auf der Ansichtsseite. Die Überwachung der erreichten Restwandstärke erfolgt mit der Sensorik 335, welche eine der Größe der Auftrefforte entsprechende Ortsauflösung aufweist. Mit Erreichen der definierten Restwandstärke/Sollwandstärke an einem einzelnen Auftreffort erfolgt unter Verwendung der Vorrichtung 300 ein Überspringen dieses Abschnitts bei Abschaltung des Laserstrahls. Die Abtastbewegungen werden so lange wiederholt (N Zyklen), bis alle Auftreffpunkte eine definierte Restwandstärke erreicht haben. Die Schwächungslinie wird hierbei gemäß diesem Ausführungsbeispiel von einer kontinuierlichen Nut oder einer Aneinanderreihung von Nuten oder Löchern beispielsweise in Form von Sacklöchern oder Mikroperforationslöchern, oder Kombinationen hiervon gebildet. Eine Abtragstiefe ist gemäß einem Ausführungsbeispiel konstant oder variiert über die Länge der Schwächungslinie einem bestimmten Regime folgend.

Gemäß diesem Ausführungsbeispiel werden fünf wiederholte Bearbeitungszyklen 345 der Kontur 100 zur Erzeugung der Schwächungslinie durchgeführt. In den ersten drei Bearbeitungszyklen 345 erfolgt die Laseransteuerung/Scanneransteuerung vollständig passend zur Kontur 100. Im vierten und fünften Bearbeitungszyklus 345 erfolgt die Laseransteuerung/Scanneransteuerung abnehmend weniger passend zur Kontur 100, es erfolgt somit im vierten und fünften Bearbeitungszyklus 345 jeweils eine aktive Änderung 350 der Kontur 100, da gemäß einem Ausführungsbeispiel bereits fertiggestellte Abschnitte übersprungen werden.

In dem hier vorgestellten Ansatz besteht die Figur/Kontur 100 aus einzelnen Teilfiguren in Form von Abschnitten, welche nach erfolgter Schwächung vom Laserstrahl übersprungen werden. Jeder Abschnitt ist gekennzeichnet durch eine definierte Restwandstärke, welche durch ein spezielles Schwächungsregime erreicht wird. Diese Schwächungsregime sind gemäß einem Ausführungsbeispiel durch Parameter definiert und untersetzt. Mögliche derartige Parameter sind gemäß einem Ausführungsbeispiel:
- Art der Laserstrahlung
- Laserleistung
- Pulsweite
- Fokussierung
- Geometrie der Schwächungslinie
- Größe und Abstände von Nuten und Löchern
- Anzahl Zyklen der Abtastbewegung
- Geschwindigkeit der Abtastbewegung

Dank der Vorrichtung 300 werden einzelne Abschnitte der Figur nach ihrer Fertigstellung übersprungen, d. h., wenn alle Abtastpunkte/Löcher die definierte Restwandstärke erreicht haben und mit "OK" bewertet wurden. In der nachfolgenden wiederholten Abtastbewegung überspringt der ausgeschaltete Laserstrahl diese Abschnitte gemäß einem Ausführungsbeispiel mit maximaler Geschwindigkeit. Dadurch wird die Zykluszeit für die Herstellung der gesamten Schwächungslinie verringert.

Figur 4 zeigt eine schematische Darstellung einer Vorrichtung 300 gemäß einem Ausführungsbeispiel zum Erzeugen einer Schwächungslinie in einer Oberfläche eines Bauteils. Dabei kann es sich um die in Fig. 2 oder 3 beschriebene Vorrichtung 300 handeln. Wie in Fig. 3 beschrieben, ist die Vorrichtung 300 gemäß diesem Ausführungsbeispiel in der Steuerung 305 implementiert, hier in Form eines Technologie-Prozessors. Die Laseransteuerung 315 und Scanneransteuerung 320 können auch als "Kommunikations-Prozessor" bezeichnet werden, welcher zur Kommunikation mit der Vorrichtung 300, dem Laser 400 zum Erzeugen des Laserstrahls 407, dem Scanner 405 und einer Benutzerschnittstelle/Bediensoftware 410 ausgebildet ist. Die Benutzerschnittstelle/Bediensoftware 410 umfasst gemäß diesem Ausführungsbeispiel ein Rezept/Vorgaben 415 mit den Sollwandstärken in Form von Sollwerten 420 für eine erforderliche Schwächung für jeden Abschnitt M₁, M₂, M₃ der Kontur 100, die gemäß diesem Ausführungsbeispiel drei Abschnitte M₁, M₂, M₃ umfasst. Gemäß diesem Ausführungsbeispiel beträgt der Sollwert 420 für die erforderliche Schwächung des ersten Abschnitts M₁ 95 %, der Sollwert 420 für die erforderliche Schwächung des zweiten Abschnitts M₂ 90 % und der Sollwert 420 für die erforderliche Schwächung des dritten Abschnitts M₃ 98 %. Ferner umfasst das Rezept/Vorgaben 415 gemäß diesem Ausführungsbeispiel weitere Vorgaben 425 wie Lochtyp, Maße, Energieeintrag, Geschwindigkeiten für jeden der Abschnitte M₁, M₂, M₃. Die Benutzerschnittstelle/Bediensoftware 410 umfasst gemäß diesem Ausführungsbeispiel ferner eine Auswerteeinrichtung/Kontrolle 430, die dazu ausgebildet ist, um die Sollwerte 420 mit Istwerten zu vergleichen und/oder alle weiteren Auswertungsparameter auszuwerten. Einzelne Abschnitte M₁, M₂, M₃, werden auf Grund von erfolgreicher Erfüllung der Vorgaben 415 mit Sprunggeschwindigkeit übersprungen, welche schneller ist, als eine Markiergeschwindigkeit beim Bearbeiten eines noch nicht fertigen Abschnitts M₁, M₂, M₃. Gemäß diesem Ausführungsbeispiel erfüllen die Abschnitte M₁, M₂ ihre Vorgaben 415 und der dritte Abschnitt M₃ erfüllt seine Vorgaben nicht. Daher werden die fertigen Abschnitte M₁, M₂ gemäß diesem Ausführungsbeispiel übersprungen und der dritte Abschnitt M₃ bearbeitet.

Die Vorrichtung 300 weist gemäß diesem Ausführungsbeispiel eine Umlaufaktivierungseinrichtung 435, eine Berechnungseinrichtung 440, eine Überprüfungseinrichtung 445 und/oder eine Sendeeinrichtung 450 auf. Die Umlaufaktivierungseinrichtung 435 aktiviert gemäß einem Ausführungsbeispiel einen Umlauf n der Abtrageeinrichtung 310 entlang der Kontur 100. Die Berechnungseinrichtung 440 berechnet eine Konturerzeugung/Figurerzeugung der Kontur 100 für den aktuellen Umlauf. Die Überprüfungseinrichtung 445 überprüft gemäß diesem Ausführungsbeispiel die Vorgaben 415 mit Istwerten von einer Sensorauswerteelektronik 455 der Sensorik 335. Die Sensorauswerteelektronik 455 stellt hierzu sensierte Sensorwerte von einem Sensorfeld 460 bereit. Wenn noch nicht alle Abschnitte M₁, M₂, M₃ ihre Vorgaben erfüllen, also noch nicht ihre Sollwandstärken aufweisen, gibt die Überprüfungseinrichtung 445 ein Aktivierungssignal 465 an die Umlaufaktivierungseinrichtung 435 zum Aktivieren eines weiteren Umlaufs aus, wobei fertige Abschnitte M₁, M₂ während des weiteren Umlaufs übersprungen werden. Wenn alle Abschnitte M₁, M₂, M₃ ihre Vorgaben erfüllen, also ihre Sollwandstärken aufweisen, gibt die Überprüfungseinrichtung 445 ein Sendesignal 470 an die Sendeeinrichtung 450 zum Senden eines Ergebnisses an die Benutzerschnittstelle/Bediensoftware 410 aus.

Gemäß einem Ausführungsbeispiel ist die Benutzerschnittstelle/Bediensoftware 410 Teil der Vorrichtung 300.

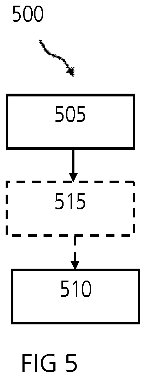

Figur 5 zeigt ein Ablaufdiagramm eines Verfahrens 500 gemäß einem Ausführungsbeispiel zum Erzeugen einer Schwächungslinie in einer Oberfläche eines Bauteils. Dabei kann es sich um ein Verfahren 500 handeln, das von der in einer der Figuren 2 bis 3 beschriebenen Vorrichtung ansteuerbar und/oder durchführbar ist.

Das Verfahren 500 weist einen Schritt 505 des Führens und einen Schritt 510 des Überspringens auf. Im Schritt 505 des Führens wird eine Abtrageeinrichtung zum Abtragen eines Materials der Oberfläche über eine Mehrzahl von Abschnitten einer vordefinierten linienförmigen Kontur unter Verwendung eines aktivierten Laserstrahls geführt, um für zumindest einen der Abschnitte eine Sollwandstärke zu erzeugen, um die Schwächungslinie zu erzeugen. Im Schritt 510 des Überspringens wird der Abschnitt übersprungen, wenn der Abschnitt die Sollwandstärke aufweist.

Optional umfasst das Verfahren 500 gemäß diesem Ausführungsbeispiel ferner einen Schritt 515 des Generierens, in dem eine Vorlaufstrecke für einen auf den Abschnitt folgenden Folgeabschnitt der Kontur generiert wird, wobei die Abtrageeinrichtung im Schritt 510 des Überspringens auf die Vorlaufstrecke springt, um über die Vorlaufstrecke bewegt zu werden und/oder in dem eine Nachlaufstrecke für einen vor dem Abschnitt angeordneten Vorababschnitt der Kontur generiert wird, wobei die Abtrageeinrichtung vor dem Schritt 510 des Überspringens über die Nachlaufstrecke bewegt wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können Verfahrensschritte des Ansatzes wiederholt sowie in einer anderen als in der beschriebenen Reihenfolge ausgeführt werden.

## Patentansprüche

1. Verfahren (500) zum Erzeugen einer Schwächungslinie in einer Oberfläche eines Bauteils, wobei das Verfahren (500) die folgenden Schritte umfasst:
Führen (505) einer Abtrageeinrichtung (310) zum Abtragen eines Materials der Oberfläche über eine Mehrzahl von Abschnitten (M₁, M₂, M₃, M₄, M₅, M₆, M₇, M₈) einer vordefinierten linienförmigen Kontur (100) unter Verwendung eines aktivierten Laserstrahls (407), um für zumindest einen der Abschnitte (M₁, M₂, M₃, M₄, M₅, M₆, M₇, M₈) eine Sollwandstärke zu erzeugen, um die Schwächungslinie zu erzeugen; und
Überspringen (510) des Abschnitts (M₁, M₂, M₃, M₄, M₅, M₆, M₇, M₈), wenn der Abschnitt (M₁, M₂, M₃, M₄, M₅, M₆, M₇, M₈) die Sollwandstärke aufweist, **gekennzeichnet durch** einem Schritt (515) des Generierens, in dem eine Vorlaufstrecke (VLS) für einen auf den Abschnitt (M₁, M₂, M₃, M₄, M₅, M₆, M₇, M₈) folgenden Folgeabschnitt (M₁, M₂, M₃, M₄, M₅, M₆, M₇, M₈) der Kontur (100) generiert wird, wobei die Abtrageeinrichtung (310) im Schritt (510) des Überspringens auf die Vorlaufstrecke (VLS) springt, um über die Vorlaufstrecke (VLS) bewegt zu werden und/oder in dem eine Nachlaufstrecke (NLS) für einen vor dem Abschnitt (M₁, M₂, M₃, M₄, M₅, M₆, M₇, M₈) angeordneten Vorababschnitt (M₁, M₂, M₃, M₄, M₅, M₆, M₇, M₈) der Kontur (100) generiert wird, wobei die Abtrageeinrichtung (310) vor dem Schritt (510) des Überspringens über die Nachlaufstrecke (NLS) bewegt wird.

2. Verfahren (500) gemäß Anspruch 1, bei dem im Schritt (510) des Überspringens eine Ausgabe des Laserstrahls (407) deaktiviert wird.

3. Verfahren (500) gemäß Anspruch 1 oder 2, bei dem im Schritt (515) des Generierens die Vorlaufstrecke (VLS) generiert wird, die direkt mit dem Folgeabschnitt (M₁, M₂, M₃, M₄, M₅, M₆, M₇, M₈) verbunden ist und/oder die Nachlaufstrecke (NLS) generiert wird, die direkt mit dem Vorababschnitt (M₁, M₂, M₃, M₄, M₅, M₆, M₇, M₈) verbunden ist.

4. Verfahren (500) gemäß einem der vorangegangenen Ansprüche, bei dem im Schritt (515) des Generierens die Vorlaufstrecke (VLS) generiert wird, deren Vorlauflänge kürzer ist, als eine Länge des Folgeabschnitts (M₁, M₂, M₃, M₄, M₅, M₆, M₇, M₈) und/oder die Nachlaufstrecke (NLS) generiert wird, deren Nachlauflänge kürzer ist, als eine Länge des Vorababschnitts (M₁, M₂, M₃, M₄, M₅, M₆, M₇, M₈).

5. Verfahren (500) gemäß einem der vorangegangenen Ansprüche, bei dem im Schritt (510) des Überspringens die Abtrageeinrichtung (310) auf direktem Weg von einem vor dem Abschnitt (M₁, M₂, M₃, M₄, M₅, M₆, M₇, M₈) angeordneten Vorababschnitt (M₁, M₂, M₃, M₄, M₅, M₆, M₇, M₈) der Kontur (100) zu einem auf den Abschnitt (M₁, M₂, M₃, M₄, M₅, M₆, M₇, M₈) folgenden Folgeabschnitt (M₁, M₂, M₃, M₄, M₅, M₆, M₇, M₈) der Kontur (100) bewegt wird.

6. Verfahren (500) gemäß einem der vorangegangenen Ansprüche, bei dem im Schritt (510) des Überspringens eine Bewegungsgeschwindigkeit der Abtrageeinrichtung (310) höher ist, als im Schritt (505) des Führens.

7. Verfahren (500) gemäß einem der vorangegangenen Ansprüche, mit einem Schritt (510) des weiteren Überspringens, in dem ein weiterer Abschnitt (M₁, M₂, M₃, M₄, M₅, M₆, M₇, M₈) der Kontur (100) übersprungen wird, wenn der weitere Abschnitt (M₁, M₂, M₃, M₄, M₅, M₆, M₇, M₈) die oder eine weitere Sollwandstärke aufweist.

8. Verfahren (500) gemäß einem der vorangegangenen Ansprüche, bei dem die Schritte (505, 510, 515) des Verfahrens (500) wiederholt werden, bis alle Abschnitte (M₁, M₂, M₃, M₄, M₅, M₆, M₇, M₈) der Kontur (100) je eine dezidierte Sollwandstärke aufweisen.

9. Vorrichtung (300) in Kombination mit einer Abtrageeinrichtung (310) zum Abtragen eines Materials der Oberfläche über eine Mehrzahl von Abschnitten (M1 , M2 , M3 , M4 , Ms , M6 , M7 , M8 ) einer vordefinierten linienförmigen Kontur (100) unter Verwendung eines aktivierten Laserstrahls (407), um für zumindest einen der Abschnitte (M1 , M2 , M3 , M4 , Ms, M6 , M7 , M8 ) eine Sollwandstärke zu erzeugen, um die Schwächungslinie zu erzeugen, wobei die Vorrichtung (300) so konfiguriert ist, um die Schritte (505, 510, 515) des Verfahrens (500) gemäß einem der vorangegangenen Ansprüche auszuführen und/oder anzusteuern.

10. Computerprogrammprodukt mit Programmcode, das bei der Ausführung des Programms durch einen Computer diesen veranlasst, das Verfahren (500) gemäß einem der Ansprüche 1 bis 8 auszuführen.

11. Maschinenlesbares Speichermedium, auf dem das Computerprogrammprodukt nach Anspruch 10 gespeichert ist.

## Claims

1. A method (500) for producing a weakening line in a surface of a component, the method (500) comprising the following steps:
guiding (505) a removal apparatus (310) for removing a material from the surface over a plurality of portions (M₁, M₂, M₃, M₄, M₅, M₆, M₇, M₈) of a predefined line-shaped contour (100) using an activated laser beam (407) to create a target wall thickness for at least one of the portions (M₁, M₂, M₃, M₄, M₅, M₆, M₇, M₈) to create the weakening line; and
skipping (510) the portion (M₁, M₂, M₃, M₄, M₅, M₆, M₇, M₈) if the portion (M₁, M₂, M₃, M₄, M₅, M₆, M₇, M₈) has the target wall thickness, **characterized by** a step (515) of generating, in which a lead-in section (VLS) for a downstream portion (M₁, M₂, M₃, M₄, M₅, M₆, M₇, M₈) following the portion (M₁, M₂, M₃, M₄, M₅, M₆, M₇, M₈) of the contour (100) is generated, wherein the removal apparatus (310) jumps to the lead-in section (VLS) in the skipping step (510) in order to be moved over the lead-in section (VLS), and/or in which a lead-out section (NLS) is generated for an upstream portion (M₁, M₂, M₃, M₄, M₅, M₆, M₇, M₈) of the contour (100) arranged upstream of the portion (M₁, M₂, M₃, M₄, M₅, M₆, M₇, M₈), wherein the removal apparatus (310) is moved over the lead-out section (NLS) before the skipping step (510).

2. The method (500) according to claim 1, wherein in the skipping step (510), an output of the laser beam (407) is deactivated.

3. The method (500) according to claim 1 or 2, wherein in the generating step (515), the lead-in section (VLS) is generated which is directly connected to the downstream portion (M₁, M₂, M₃, M₄, M₅, M₆, M₇, M₈) and/or the lead-out section (NLS) is generated, which is directly connected to the upstream portion (M₁, M₂, M₃, M₄, M₅, M₆, M₇, M₈).

4. The method (500) according to any of the preceding claims, in which in the generating step (515), the lead-in section (VLS) is generated, the lead-in length of which is shorter than a length of the downstream portion (M₁, M₂, M₃, M₄, M₅, M₆, M₇, M₈), and/or the lead-out section (NLS) is generated, the lead-out length of which is shorter than a length of the upstream portion (M₁, M₂, M₃, M₄, M₅, M₆, M₇, M₈).

5. The method (500) according to any of the preceding claims, wherein in the skipping step (510), the removal apparatus (310) is moved directly from an upstream portion (M₁, M₂, M₃, M₄, M₅, M₆, M₇, M₈) of the contour (100) arranged upstream of the portion (M₁, M₂, M₃, M₄, M₅, M₆, M₇, M₈) to a downstream portion (M₁, M₂, M₃, M₄, M₅, M₆, M₇, M₈) of the contour (100) following downstream of the portion (M₁, M₂, M₃, M₄, M₅, M₆, M₇, M₈).

6. The method (500) according to any of the preceding claims, wherein in the skipping step (510), a movement speed of the removal apparatus (310) is higher than in the guiding step (505).

7. The method (500) according to any of the preceding claims, comprising a step (510) of further skipping, in which a further portion (M₁, M₂, M₃, M₄, M₅, M₆, M₇, M₈) of the contour (100) is skipped if the further portion (M₁, M₂, M₃, M₄, M₅, M₆, M₇, M₈) has the or another target wall thickness.

8. The method (500) according to any of the preceding claims, wherein the steps (505, 510, 515) of the method (500) are repeated until all portions (M₁, M₂, M₃, M₄, M₅, M₆, M₇, M₈) of the contour (100) each have a dedicated target wall thickness.

9. A device (300) in combination with a removal apparatus (310) for removing a material from the surface over a plurality of portions (M1, M2, M3, M4, M5, M6, M7, M8) of a predefined line-shaped contour (100) using an activated laser beam (407) to create, for at least one of the portions (M1, M2, M3, M4, M5, M6, M7, M8), a target wall thickness to create the weakening line,
wherein the device (300) is configured to execute and/or control the steps (505, 510, 515) of the method (500) according to any of the preceding claims.

10. A computer program product with program code which, when the program is executed by a computer, causes the computer to execute the method (500) according to any of claims 1 to 8.

11. A machine-readable storage medium on which the computer program according to claim 10 is stored.

## Revendications

1. Procédé (500) pour la production d'une ligne d'affaiblissement dans une surface d'un composant, dans lequel le procédé (500) comprend les étapes suivantes :
guidage (505) d'un appareil d'enlèvement (310) permettant d'enlever un matériau de la surface sur une pluralité de sections (M₁, M₂, M₃, M₄, M₅, M₆, M₇, M₈) d'un contour (100) linéaire prédéfini à l'aide d'un faisceau laser (407) activé pour produire une épaisseur de paroi cible pour au moins l'une des sections (M₁, M₂, M₃, M₄, M₅, M₆, M₇, M₈) afin de produire la ligne d'affaiblissement ; et
omission (510) de la section (M₁, M₂, M₃, M₄, M₅, M₆, M₇, M₈) si la section (M₁, M₂, M₃, M₄, M₅, M₆, M₇, M₈) présente l'épaisseur de paroi cible, **caractérisé par** une étape (515) de génération, dans laquelle une voie d'avance (VLS) est générée pour une section suivante (M₁, M₂, M₃, M₄, M₅, M₆, M₇, M₈) du contour (100) suivant la section (M₁, M₂, M₃, M₄, M₅, M₆, M₇, M₈), dans lequel, à l'étape (510) d'omission, l'appareil d'enlèvement (310) saute sur la voie d'avance (VLS) afin d'être déplacé sur la voie d'avance (VLS) et/ou dans laquelle une voie de suivi (NLS) est générée pour une section précédente (M₁, M₂, M₃, M₄, M₅, M₆, M₇, M₈) du contour (100) disposée avant la section (M₁, M₂, M₃, M₄, M₅, M₆, M₇, M₈), dans lequel l'appareil d'enlèvement (310) est déplacé sur la voie de suivi (NLS) avant l'étape (510) d'omission.

2. Procédé (500) selon la revendication 1, dans lequel, à l'étape (510) d'omission, une émission du faisceau laser (407) est désactivée.

3. Procédé (500) selon la revendication 1 ou 2, dans lequel, à l'étape (515) de génération, la voie d'avance (VLS) est générée, laquelle est directement reliée à la section suivante (M₁, M₂, M₃, M₄, M₅, M₆, M₇, M₈) et/ou la voie de suivi (NLS) est générée, laquelle est directement reliée à la section précédente (M₁, M₂, M₃, M₄, M₅, M₆, M₇, M₈).

4. Procédé (500) selon l'une des revendications précédentes, dans lequel, à l'étape (515) de génération, la voie d'avance (VLS) est générée, dont la longueur d'avance est plus courte qu'une longueur de la section suivante (M₁, M₂, M₃, M₄, M₅, M₆, M₇, M₈), et/ou la voie de suivi (NLS) est générée, dont la longueur de suivi est plus courte qu'une longueur de la section précédente (M₁, M₂, M₃, M₄, M₅, M₆, M₇, M₈).

5. Procédé (500) selon l'une des revendications précédentes, dans lequel, à l'étape (510) d'omission, l'appareil d'enlèvement (310) est déplacé directement d'une section précédente (M₁, M₂, M₃, M₄, M₅, M₆, M₇, M₈) du contour (100) disposée avant la section (M₁, M₂, M₃, M₄, M₅, M₆, M₇, M₈) vers une section suivante (M₁, M₂, M₃, M₄, M₅, M₆, M₇, M₈) du contour (100) suivant la section (M₁, M₂, M₃, M₄, M₅, M₆, M₇, M₈).

6. Procédé (500) selon l'une des revendications précédentes, dans lequel, à l'étape (510) d'omission, une vitesse de déplacement de l'appareil d'enlèvement (310) est supérieure à celle dans l'étape (505) de guidage.

7. Procédé (500) selon l'une des revendications précédentes, comportant une étape (510) d'omission supplémentaire dans laquelle une autre section (M₁, M₂, M₃, M₄, M₅, M₆, M₇, M₈) du contour (100) est omise si l'autre section (M₁, M₂, M₃, M₄, M₅, M₆, M₇, M₈) présente l'épaisseur de paroi cible ou une autre épaisseur de paroi cible.

8. Procédé (500) selon l'une des revendications précédentes, dans lequel les étapes (505, 510, 515) du procédé (500) sont répétées jusqu'à ce que toutes les sections (M₁, M₂, M₃, M₄, M₅, M₆, M₇, M₈) du contour (100) présentent chacune une épaisseur de paroi cible dédiée.

9. Dispositif (300) en combinaison avec un appareil d'enlèvement (310) pour l'enlèvement d'un matériau de la surface sur une pluralité de sections (M1, M2, M3, M4, Ms, M6, M7, M8) d'un contour (100) linéaire prédéfini à l'aide d'un faisceau laser (407) activé pour produire une épaisseur de paroi cible pour au moins l'une des sections (M1, M2, M3, M4, Ms, M6, M7, M8) afin de produire la ligne d'affaiblissement,
dans lequel le dispositif (300) est configuré pour exécuter et/ou commander les étapes (505, 510, 515) du procédé (500) selon l'une des revendications précédentes.

10. Produit programme informatique comportant un code de programme qui, lorsque le programme est exécuté par un ordinateur, amène ledit ordinateur à exécuter le procédé (500) selon l'une des revendications 1 à 8.

11. Support de stockage lisible par machine, sur lequel le produit programme informatique selon la revendication 10 est stocké.
